(19) Europäisches Patentamt
European Patent Office
Office européen des brevets

(11) Numéro de publication: **0 484 848 A1**

## (12) DEMANDE DE BREVET EUROPEEN

(21) Numéro de dépôt: **91118758.1**

(22) Date de dépôt: **04.11.91**

(51) Int. Cl.5: **G01M 19/00**, G01M 7/00

(30) Priorité: **06.11.90 FR 9013729**

(43) Date de publication de la demande:
**13.05.92 Bulletin 92/20**

(84) Etats contractants désignés:
**DE FR GB IT NL**

(71) Demandeur: **ALCATEL ESPACE**
**11, avenue Dubonnet**
**F-92407 Courbevoie Cédex(FR)**

(72) Inventeur: **Bressan, Elie**
**12, rue d'Ustaritz**
**F-31240 l'Union(FR)**

(74) Mandataire: **Weinmiller, Jürgen et al**
**Lennéstrasse 9 Postfach 24**
**W-8133 Feldafing(DE)**

(54) **Dispositif de test d'équipements en mouvement.**

(57) Dispositif de test d'équipements en mouvement comprenant un moyen d'essai (1) destiné à tester un équipement (2) et une enceinte mobile (3) contenant un gaz plus léger que l'air et entourant l'équipement à tester (2) disposé sur le moyen d'essai (1).

EP 0 484 848 A1

La présente invention a pour objet un dispositif de test d'équipements en mouvement, destiné en particulier à tester des équipements spatiaux.

Les équipements utilisés dans les applications spatiales (panneaux solaires, réflecteurs d'antennes, voiles solaires,...), ainsi que les satellites eux-mêmes, par exemple, doivent subir différentes simulations de comportement destinées à tester leur fiabilité dans divers environnements mécaniques et à déterminer certaines de leurs caractéristiques physiques. En particulier, ces équipements sont soumis à des vibrations sinusoïdales ou aléatoires; la détermination de leur moment d'inertie, de leur centre de gravité, et l'équilibrage dynamique sont également effectués à l'aide de tests de l'équipement en mouvement.

Jusqu'à présent, ces tests étaient effectués soit sous vide, soit dans les conditions ambiantes dans la grande majorité des cas.

Le fait de travailler sous vide permet de se placer dans des conditions quasiment similaires à celles dans lesquelles évoluent le satellite et ses divers équipements dans l'espace. L'essai est réalisé sous une cloche à vide dans laquelle ont été placés le moyen d'essai et l'équipement à tester. Or les moteurs électriques destinés à reproduire le mouvement de l'équipement doivent être lubrifiés régulièrement. Sous vide, le lubrifiant utilisé se vaporise et il n'est donc pas utilisable. Cet inconvénient conduit donc à utiliser un matériel spécifique aux essais sous vide, et donc très onéreux. Par ailleurs, il faut utiliser des connexions étanches entre les jauges de mesures, situées à l'intérieur de la cloche, et les appareils d'enregistrement, situés hors de la cloche. Enfin, l'utilisation d'une infrastructure rigide comme la cloche à vide est d'un coût très élevé. La réalisation d'essais sous vide est donc complexe, peu flexible et onéreuse.

C'est pourquoi la majorité des simulations est réalisée dans les conditions ambiantes. Or les conditions ambiantes (air à la pression atmosphérique) sont nettement différentes des conditions réelles proches du vide spatial. En particulier, la résistance du milieu ambiant sur les surfaces en mouvement de l'équipement à tester est très importante et croît avec la surface de l'équipement et le carré de la vitesse du mouvement qu'il subit. Cette résistance aérodynamique étant très difficile à modéliser par calcul du fait de la complexité des surfaces de l'équipement à tester, il n'est pas possible de corriger les résultats des tests obtenus de manière à ne pas en tenir compte. En particulier, la détermination du moment d'inertie ou du centre de gravité d'une structure de surface importante est effectuée par la mesure des paramètres caractéristiques d'un mouvement pendulaire très perturbé par la résistance aérodynamique. Ceci implique donc une erreur sur la valeur du moment d'inertie ou sur la position du centre de gravité, entraînant une erreur lors de l'équilibrage dynamique de cet équipement, et donc lors de l'équilibrage dynamique du satellite lui-même.

De plus, la quantité de mouvement nécessaire à déplacer un certain volume de gaz est directement proportionnelle à la densité de ce volume de gaz. De ce fait, pour une puissance donnée des moteurs, la quantité de mouvement obtenue sera d'autant plus faible au regard de la quantité de mouvement nécessaire que la densité du milieu ambiant est importante. Il n'est alors pas possible d'obtenir les mouvements désirés.

Enfin, lors d'essais en vibrations, par exemple, en vue de déterminer les fréquences et les masses modales caractérisant la structure, la densité du milieu ambiant entraîne des modifications des valeurs de ces fréquences et masses modales par rapport aux valeurs calculées. En particulier, les masses modales à l'air ambiant sont plus élevées que dans le vide, ce qui introduit des contraintes supplémentaires sur l'équipement testé (puisque celui-ci a été dimensionné pour fonctionner sous vide), ces contraintes pouvant conduire à la rupture de la structure.

Le but de la présente invention est de réaliser un dispositif de test d'équipements en mouvement, dans un gaz plus léger que l'air, permettant de s'affranchir des inconvénients de l'air ambiant tout en étant moins onéreux qu'une installation sous vide.

La présente invention propose à cet effet un dispositif de test d'équipements en mouvement comprenant un moyen d'essai destiné à tester ledit équipement, caractérisé en ce qu'il comporte une enceinte mobile contenant un gaz plus léger que l'air, ladite enceinte entourant ledit équipement à tester disposé sur ledit moyen d'essai.

Un tel dispositif permet de réduire l'influence préjudiciable de la résistance aérodynamique, tout en ayant un coût nettement inférieur et une plus grande flexibilité que les dispositifs permettant d'effectuer ces simulations sous vide.

Selon une caractéristique importante de ce dispositif, l'enceinte, qui est hémisphérique à sa partie supérieure et cylindrique à sa partie inférieure, est constituée d'un matériau souple et étanche au gaz plus léger que l'air qu'elle contient. Avantageusement, ce matériau peut être translucide.

Ainsi, il est possible d'observer le test qui se déroule à l'intérieur de l'enceinte. Le fait d'utiliser un matériau souple permet de plier l'enceinte comme une tente, et donc d'en diminuer l'encombrement.

On peut, par exemple, utiliser de l'hélium dans un dispositif selon l'invention; l'enceinte est alors par exemple constituée de polyéthylène triplex.

Selon une autre caractéristique du dispositif selon l'invention, l'enceinte peut être reliée, à sa partie supérieure, à un moyen mécanique extérieur permettant de la soulever, de la déplacer et de l'abaisser. Le lien entre l'enceinte et le moyen mécanique extérieur peut être effectué à l'aide d'élingues fixées sur l'enceinte par l'intermédiaire de pièces de reprise. Le moyen mécanique utilisé est par exemple un palan.

Il est toutefois possible de s'affranchir de ce moyen extérieur pour manipuler l'enceinte. En effet, celle-ci s'élève d'elle-même lorsqu'elle est remplie d'hélium, et devient donc facilement manoeuvrable.

En outre, l'enceinte peut être maintenue au sol au moyen d'un tore de maintien l'entourant à sa partie inférieure. Il est également possible d'installer une jupe d'étanchéité entourant aussi l'enceinte à sa partie inférieure et fixée à la fois à l'enceinte et au sol de manière à assurer une parfaite étanchéité de l'ensemble.

De manière avantageuse, le gaz est introduit sous pression dans ladite enceinte par une ouverture pratiquée à sa partie supérieure. Afin d'assurer une répartition volumique uniforme du gaz dans l'enceinte, une membrane horizontale étanche au gaz plus léger que l'air introduit, et régulièrement percée de trous, est disposée dans la partie supérieure de l'enceinte.

Enfin, le dispositif objet de l'invention peut être destiné à tester des équipements spatiaux en mouvement.

D'autres caractéristiques et avantages de la présente invention apparaîtront lors de la description suivante d'une mise en oeuvre du dispositif selon l'invention et d'un exemple de résultats obtenus à l'aide de ce dispositif, donnée à titre illustratif mais nullement limitatif.

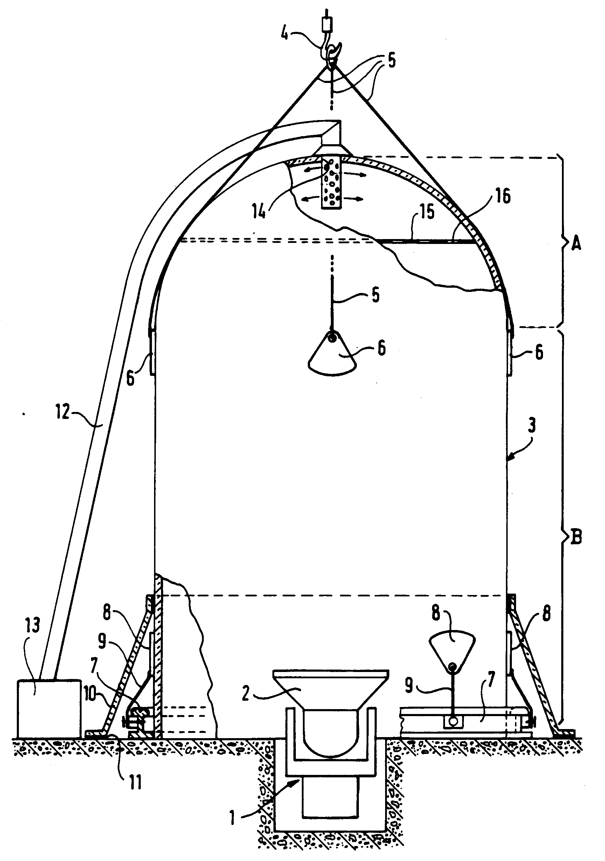

La figure unique est une vue en élévation avec arrachements partiels d'une mise en oeuvre préférentielle du dispositif selon l'invention.

Le dispositif selon l'invention comporte un moyen d'essai 1, un équipement à tester 2, par exemple un équipement spatial, et une enceinte 3.

L'enceinte 3, dont la partie supérieure A est hémisphérique (calotte) et la partie inférieure B cylindrique, est réalisée par exemple en polyéthyléne triplex (elle est formée de trois couches de polyéthylène selon une technique employée couramment dans le domaine des dirigeables). Elle est suspendue à un palan 4 permettant de la soulever, de la déplacer et de la déposer au-dessus du moyen 1 et de l'équipement 2 de manière à ce qu'elle entoure l'ensemble 1-2; le palan 4 sert également à la maintenir de manière plus sûre afin qu'elle n'endommage pas l'équipement à tester 2 ou le moyen de test 1. Ce maintien est effectué grâce à plusieurs élingues 5 dont toutes les extrémités sont reliées au palan 4, d'un côté, chaque extrémité étant reliée, de l'autre côté, à une pièce de reprise 6, par exemple en tissu de verre, fixée sur l'enceinte 3, servant également de renfort pour reprendre les efforts dûs au poids de l'enceinte 3 et éviter ainsi de la déchirer.

Hors fonctionnement, l'enceinte 3 est pliée comme une tente, ce qui évite tout problème d'encombrement.

En fonctionnement, elle est abaissée grâce au palan 4 de manière à venir entourer l'ensemble 1-2, et maintenue au sol grâce à un tore de maintien métallique 7 ayant la forme d'un rail. Plusieurs pièces de reprise 8 similaires aux pièces de reprise 6 permettent d'attacher l'enceinte 3 au tore 7 au moyen d'élingues 9. L'étanchéité totale de l'ensemble est assurée grâce à une jupe d'étanchéité 10, par exemple en un matériau identique à celui de l'enceinte 3, entourant l'enceinte 3 au niveau du sol et fixée d'une part au sol par un mastic d'étanchéité 11 et d'autre part à l'enceinte 3 par soudure.

Lors de l'utilisation du dispositif selon l'invention, l'enceinte 3 est remplie d'hélium de la manière suivante : l'enceinte 3 étant dépliée sur le sol, de l'hélium sous pression est introduit dans la calotte A grâce à un tube 12, par exemple en polyéthylène, relié à un réservoir d'alimentation sous pression 13, et pénétrant dans la calotte A par une ouverture 14 effectuée au sommet de la calotte A. On remplit d'hélium uniquement la partie de l'enceinte 3 comprise entre le sommet et un diffuseur 15 dont on expliquera l'utilité plus loin. L'hélium étant plus léger que l'air, l'enceinte 3 s'élève (l'effort d'élévation apporté par l'hélium équivaut à 1kg par m$^3$) et on l'attache alors grâce aux élingues 5 au palan 4. Elle est déplacée grâce au palan 4 au-dessus de l'équipement à tester 2 disposé sur le moyen d'essai 1 et descendue puis arrimée au sol comme expliqué plus haut, de manière à recouvrir l'ensemble 1-2 et sans assurer l'étanchéité. On termine alors le remplissage grâce à l'hélium sous pression, l'air étant expulsé vers l'extérieur puisque l'étanchéité n'est pas encore réalisée. On assure une bonne répartition volumique de l'hélium dans l'enceinte 3 grâce au diffuseur 15, formé d'une membrane horizontale fixée à la calotte A, étanche à l'hélium et régulièrement percée de trous 16.

On réalise ensuite l'étanchéité totale grâce aux moyens décrits plus haut.

Le dispositif ainsi réalisé a l'avantage d'être mobile, facilement démontable, et de n'entraîner aucune modification du moyen d'essai déjà existant puisqu'il vient le recouvrir.

Dans un exemple de réalisation mis en oeuvre pour l'équilibrage dynamique d'une maquette de satellite reproduisant exactement sa surface, on monte la maquette à équilibrer sur un plateau tournant, le tout étant à l'intérieur d'un dispositif comme décrit ci-dessus, rempli d'hélium.

Lors des essais à l'air ambiant, sans utilisation du dispositif selon l'invention, la vitesse de rotation maximale atteinte est de 25 tours/min à pleine capacité du moteur. Or, la vitesse de rotation nécessaire à la réalisation du test est de 40 tours/min. Il est donc impossible, avec le moteur utilisé, de fournir la puissance nécessaire.

Lors des essais avec utilisation du dispositif selon l'invention, sous atmosphère d'hélium non homogène (5 à 6 % d'hélium à 1m du sol, 100 % au sommet de l'enceinte), la vitesse de rotation atteinte est de 50 tours/min à moitié capacité du moteur. On a donc quadruplé la puissance utilisable du moteur et atteint la vitesse de rotation nécessaire à la réalisation de l'équilibrage dynamique.

Bien entendu, l'invention n'est pas limitée au mode de réalisation préférentiel ni à l'exemple qui viennent d'être décrits.

En particulier, le dispositif objet de l'invention peut être destiné à tester tout équipement en mouvement.

L'enceinte 3 peut être réalisée dans tout matériau souple et étanche au passage du gaz introduit dans l'enceinte.

N'importe quel gaz plus léger que l'air peut être utilisé pour remplir l'enceinte.

D'autre part, tout autre moyen permettant d'augmenter l'étanchéité de l'enceinte et autre que l'utilisation d'une triple épaisseur de matériau peut être employé.

Il est également possible de déplacer l'enceinte 3 sans utiliser le palan 4. En effet, lorsque l'enceinte 3 s'est élevée d'elle-même après le remplissage en hélium de la partie supérieure de l'enceinte 3 comprise entre le sommet et le diffuseur 15, il suffit de tenir les élingues, à la main par exemple, pour la déplacer. On l'arrime ensuite au sol comme expliqué plus haut, puis on l'attache au palan 4, ce dernier étant alors uniquement utilisé comme moyen de sécurité empêchant l'enceinte d'endommager le matériel.

Avantageusement, un trou d'homme, sous forme de double sas par exemple, peut être ménagé dans l'enceinte afin de permettre une intervention humaine en cas d'anomalie lors du déroulement de l'essai.

Enfin, et de manière très avantageuse, on peut, selon le test à effectuer, laisser une fuite d'hélium vers le bas et assurer un débit permanent d'hélium au niveau de l'ouverture 14 (dans le cas de l'équilibrage dynamique, par exemple), ou bien assurer l'étanchéité totale comme décrit précédemment (par exemple pour la détermination du moment d'inertie qui nécessite un milieu calme).

## Revendications

1. Dispositif de test d'équipements en mouvement comprenant un moyen d'essai destiné à tester ledit équipement, caractérisé en ce qu'il comporte une enceinte mobile contenant un gaz plus léger que l'air, ladite enceinte entourant ledit équipement à tester disposé sur ledit moyen d'essai.

2. Dispositif selon la revendication 1 caractérisé en ce que ladite enceinte, qui est hémisphérique à sa partie supérieure et cylindrique à sa partie inférieure, est constituée d'un matériau souple et étanche audit gaz plus léger que l'air.

3. Dispositif selon l'une des revendications 1 et 2 caractérisé en ce que ladite enceinte est constituée d'un matériau translucide.

4. Dispositif selon l'une des revendications 1 à 3 caractérisé en ce que ladite enceinte est en polyéthylène triplex et en ce que ledit gaz plus léger que l'air est de l'hélium.

5. Dispositif selon l'une des revendications 1 à 4 caractérisé en ce qu'un moyen mécanique extérieur relié à ladite enceinte permet de la soulever, de la déplacer et de l'abaisser.

6. Dispositif selon la revendication 5 caractérisé en ce que ledit moyen mécanique extérieur est relié à ladite enceinte par des élingues fixées sur ladite enceinte par l'intermédiaire de pièces de reprise.

7. Dispositif selon l'une des revendications 5 et 6 caractérisé en ce que ledit moyen mécanique est un palan.

8. Dispositif selon l'une des revendications 1 à 7 caractérisé en ce que ladite enceinte est maintenue au sol au moyen d'un tore de maintien entourant ladite enceinte à sa partie inférieure.

9. Dispositif selon l'une des revendications 1 à 8 caractérisé en ce qu'une jupe d'étanchéité entourant ladite enceinte dans sa partie inférieure est fixée à la fois à ladite enceinte et au sol de manière à assurer une parfaite étanchéité de l'ensemble.

10. Dispositif selon l'une des revendications 1 à 9 caractérisé en ce que ledit gaz est introduit sous pression dans ladite enceinte par une ouverture pratiquée à la partie supérieure de ladite enceinte.

**11.** Dispositif selon l'une des revendications 1 à 10 caractérisé en ce qu'une membrane horizontale étanche audit gaz plus léger que l'air et régulièrement percée de trous est disposée dans la partie supérieure de ladite enceinte de manière à assurer une répartition volumique uniforme dudit gaz introduit dans ladite enceinte.

**12.** Dispositif selon l'une des revendications 1 à 11 caractérisé en ce qu'il est destiné à tester des équipements spatiaux en mouvement.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CRYOGENICS vol. 30, no. 3, 1 Mars 1990, GUIDFORD,SURREY,GB pages 230 - 232; H.-D.DENNER: 'liquid helium vibration cryostat for space qualification tests' | 1-2,5,12 | G01M19/00 G01M7/00 |
| Y | * le document en entier * | 7 | |
| Y | CH-A-371 619 (GENERAL ELECTRIC) | 7 | |
| A | * page 2, ligne 87 - ligne 95; figure 1 * | 1 | |

-----

DOMAINES TECHNIQUES RECHERCHES (Int. Cl.5)

G01M

Le présent rapport a été établi pour toutes les revendications

| Lieu de la recherche | Date d'achèvement de la recherche | Examinateur |
|---|---|---|
| LA HAYE | 06 FEVRIER 1992 | ZAFIROPOULOS N. |

EPO FORM 1503 03.82 (P0402)